(19) Europäisches Patentamt
European Patent Office
Office européen des brevets

(11) **EP 4 495 665 A1**

(12) **EUROPEAN PATENT APPLICATION**
published in accordance with Art. 153(4) EPC

(43) Date of publication:
**22.01.2025 Bulletin 2025/04**

(21) Application number: **23770319.4**

(22) Date of filing: **24.02.2023**

(51) International Patent Classification (IPC):
***G02B 27/02*** (2006.01)      ***G02B 5/30*** (2006.01)

(52) Cooperative Patent Classification (CPC):
**G02B 5/30; G02B 27/02**

(86) International application number:
**PCT/JP2023/006727**

(87) International publication number:
**WO 2023/176360 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022   JP 2022039285
14.03.2022   JP 2022039286
10.05.2022   JP 2022077634**

(71) Applicant: **Nitto Denko Corporation
Ibaraki-shi, Osaka 567-8680 (JP)**

(72) Inventor: **GOTO, Shusaku
Ibaraki-shi, Osaka 567-8680 (JP)**

(74) Representative: **Hoffmann Eitle
Patent- und Rechtsanwälte PartmbB
Arabellastraße 30
81925 München (DE)**

(54) **LENS PART, LAMINATE, DISPLAY BODY, AND MANUFACTURING METHOD AND DISPLAY METHOD FOR DISPLAY BODY**

(57)      Provided is a lens unit that can achieve a reduction in weight of a pair of VR goggles and an improvement in definition thereof. The lens unit according to one embodiment of the present invention is a lens unit to be used in a display system configured to display an image to a user, the lens unit including: a reflecting portion including a reflection-type polarizing member and an absorption-type polarizing member arranged on a front side of the reflection-type polarizing member, the reflecting portion being configured to reflect light, which has been emitted to the front side from a display surface of a display element configured to display the image, and has passed through a polarizing member and a first λ/4 member; a first lens portion arranged on an optical path between the display element and the reflecting portion; a half mirror arranged between the display element and the first lens portion, the half mirror being configured to transmit the light emitted from the display element and to reflect the light reflected by the reflecting portion toward the reflecting portion; and a second λ/4 member arranged on an optical path between the half mirror and the reflecting portion, wherein an absorption-type polarizer for forming the absorption-type polarizing member has a thickness of 8 um or less.

FIG. 1

EP 4 495 665 A1

**Description**

Technical Field

The present invention relates to a lens unit, a laminate, a display body, a method of producing a display body, and a display method.

Background Art

Image display apparatus typified by a liquid crystal display apparatus and an electroluminescence (EL) display apparatus (e.g., an organic EL display apparatus) have been rapidly gaining more widespread use. In the image display apparatus, an optical member, such as a polarizing member or a retardation member, has been generally used for achieving image display and improving the performance of the image display (see, for example, Patent Literature 1).
In recent years, new applications of the image display apparatus have been developed. For example, a pair of goggles (VR goggles) with a display for achieving virtual reality (VR) has started to be commercialized. A reduction in weight of the pair of VR goggles, an improvement in definition thereof, and the like have been desired because an investigation has been made on the utilization of the pair of VR goggles in various fields. The weight reduction may be achieved by, for example, thinning a lens to be used in the pair of VR goggles. Meanwhile, the development of an optical member suitable for a display system using a thin lens has also been desired.

Citation List

Patent Literature

[PTL 1] JP 2021-103286 A

Summary of Invention

Technical Problem

In view of the foregoing, a primary object of the present invention is to provide a lens unit that can achieve a reduction in weight of a pair of VR goggles and an improvement in definition thereof.

Solution to Problem

1. According to one embodiment of the present invention, there is provided a lens unit to be used in a display system configured to display an image to a user, the lens unit including: a reflecting portion including a reflection-type polarizing member and an absorption-type polarizing member arranged on a front side of the reflection-type polarizing member, the reflecting portion being configured to reflect light, which has been emitted to the front side from a display surface of a display element configured to display the image, and has passed through a polarizing member and a first $\lambda/4$ member; a first lens portion arranged on an optical path between the display element and the reflecting portion; a half mirror arranged between the display element and the first lens portion, the half mirror being configured to transmit the light emitted from the display element and to reflect the light reflected by the reflecting portion toward the reflecting portion; and a second $\lambda/4$ member arranged on an optical path between the half mirror and the reflecting portion, wherein an absorption-type polarizer for forming the absorption-type polarizing member has a thickness of 8 um or less.

2. In the lens unit according to the above-mentioned item 1, a reflection axis of the reflection-type polarizing member and an absorption axis of the absorption-type polarizing member may be arranged parallel to each other.

3. In the lens unit according to the above-mentioned item 1 or 2, the first lens portion and the half mirror may be integrated.

4. The lens unit according to any one of the above-mentioned items 1 to 3 may further include a second lens portion arranged on the front side of the reflecting portion.

5. In the lens unit according to any one of the above-mentioned items 1 to 4, an angle formed by an absorption axis of the polarizing member in the display element and a slow axis of the first $\lambda/4$ member may be from 40° to 50°, and an angle formed by the absorption axis of the polarizing member in the display element and a slow axis of the second $\lambda/4$ member may be from 40° to 50°.

6. In the lens unit according to any one of the above-mentioned items 1 to 5, a ratio of the thickness of the absorption-type polarizer to a thickness of the reflection-type polarizing member may be 15% or less.

7. According to one embodiment of the present invention, there is provided a laminate to be used in the reflecting portion of the lens unit of any one of the above-mentioned items 1 to 6, the laminate including: the reflection-type polarizing member; and the absorption-type polarizing member.

8. In the laminate according to the above-mentioned item 7, the reflection-type polarizing member and the absorption-type polarizing member may be laminated via an adhesion layer.

9. According to one embodiment of the present invention, there is provided a display body, including the lens unit of any one of the above-mentioned items 1 to 6.

10. According to one embodiment of the present invention, there is provided a method of producing a display body including the lens unit of any one of the above-mentioned items 1 to 6.

11. According to one embodiment of the present invention, there is provided a display method, including: a step of passing light representing an image, which has been emitted through a polarizing member and a first $\lambda/4$ member, through a half mirror and a first lens portion; a step of passing the light, which has passed through the half mirror and the first lens portion, through a second $\lambda/4$ member; a step of reflecting the light, which has passed through the second $\lambda/4$ member, toward the half mirror with a reflecting portion including a reflection-type polarizing member; a step of enabling the light, which has been reflected by the reflecting portion and the half mirror, to penetrate through the reflection-type polarizing member of the reflecting portion with the second $\lambda/4$ member; and a step of causing the light, which has penetrated through the reflection-type polarizing member, to penetrate through an absorption-type polarizing member, wherein an absorption-type polarizer for forming the absorption-type polarizing member has a thickness of 8 um or less.

12. According to one embodiment of the present invention, there is provided a method of producing the absorption-type polarizer of the lens unit, including: forming a polyvinyl alcohol-based resin layer containing a halide and a polyvinyl alcohol-based resin on one side of an elongate thermoplastic resin substrate to provide a laminate; and subjecting the laminate to in-air auxiliary stretching treatment, dyeing treatment, underwater stretching treatment, and drying shrinkage treatment, which includes heating the laminate, while conveying the laminate in a lengthwise direction thereof, to shrink the laminate by 2% or more in a widthwise direction thereof, in the stated order.

13. In the production method according to the above-mentioned item 12, a content of the halide in the polyvinyl alcohol-based resin layer is from 5 parts by weight to 20 parts by weight with respect to 100 parts by weight of the polyvinyl alcohol-based resin.

14. In the production method according to the above-mentioned item 12 or 13, a stretching ratio in the in-air auxiliary stretching treatment is 2.0 times or more.

15. In the production method according to any one of the above-mentioned items 12 to 14, the drying shrinkage treatment step is a step of heating the laminate with heated rolls.

16. In the production method according to the above-mentioned item 15, the heated rolls each have a temperature of from 60°C to 120°C, and a shrinkage ratio of the laminate in the widthwise direction by the drying shrinkage treatment is 2% or more.

Advantageous Effects of Invention

According to the lens unit of the embodiment of the present invention, the reduction in weight of the pair of VR goggles and the improvement in definition thereof can be achieved.

Brief Description of Drawings

FIG. **1** is a schematic view for illustrating the schematic configuration of a display system according to one embodiment of the present invention.

FIG. **2** is a schematic sectional view for illustrating an example of a laminate to be used in a reflecting portion of the display system illustrated in FIG. **1.**

FIG. **3** is a schematic perspective view for illustrating an example of a multilayer structure in a reflection-type polarizing film.

FIG. **4** is a schematic view for illustrating an example of drying shrinkage treatment including using heated rolls.

FIG. **5** is an observation photograph showing optical unevenness.

Description of Embodiments

Embodiments of the present invention are described below with reference to the drawings. However, the present invention is not limited to these embodiments. In addition, for clearer illustration, some widths, thicknesses, shapes, and the like of respective portions may be schematically illustrated in the drawings in comparison to the embodiments. However, the widths, the thicknesses, the shapes, and the like are each merely an example, and do not limit the understanding of the present invention.

(Definitions of Terms and Symbols)

The definitions of terms and symbols used herein are as described below.

(1) Refractive Indices (nx, ny, and nz)

"nx" represents a refractive index in a direction in which an in-plane refractive index is maximum (that is, slow axis direction), "ny" represents a refractive index in a direction perpendicular to a slow axis in a plane (that is, fast axis direction), and "nz" represents a refractive index in a thickness direction.

(2) In-plane Retardation (Re)

"Re($\lambda$)" refers to an in-plane retardation measured at 23°C with light having a wavelength of $\lambda$ nm. For example, "Re(550)" refers to an in-plane retardation measured at 23°C with light having a wavelength of 550 nm. The Re($\lambda$) is determined from the equation "Re($\lambda$)=(nx-ny)$\times$d" when the thickness of a layer (film) is represented by "d" (nm).

(3) Thickness Direction Retardation (Rth)

"Rth($\lambda$)" refers to a thickness direction retardation measured at 23°C with light having a wavelength of $\lambda$ nm. For example, "Rth(550)" refers to a thickness direction retardation measured at 23°C with light having a wavelength of 550 nm. The Rth($\lambda$) is determined from the equation "Rth($\lambda$)=(nx-nz)$\times$d" when the thickness of a layer (film) is represented by "d" (nm).

(4) Nz Coefficient

An Nz coefficient is determined from the equation "Nz=Rth/Re" .

(5) Angle

When reference is made to an angle herein, the angle encompasses both angles in a clockwise direction and a counterclockwise direction with respect to a reference direction. Accordingly, for example, the term "45°" means ±45°.

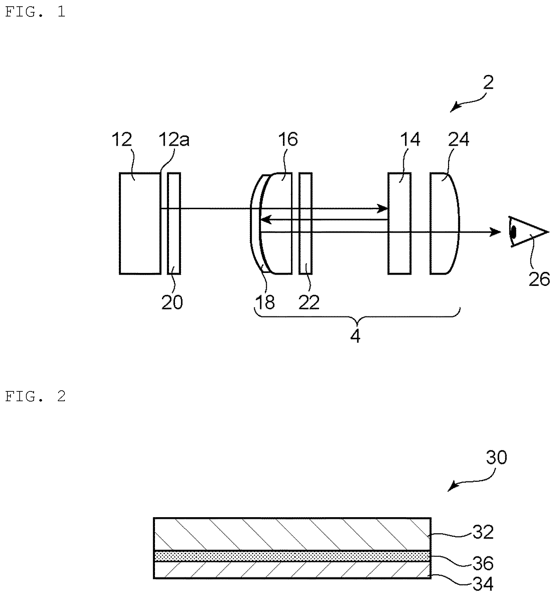

FIG. **1** is a schematic view for illustrating the schematic configuration of a display system according to one embodiment of the present invention. The arrangement, shapes, and the like of the respective constituents of a display system **2** are schematically illustrated in FIG. **1.** The display system **2** includes: a display element **12;** a reflecting portion **14;** a first lens portion **16;** a half mirror **18;** a first retardation member **20;** a second retardation member **22;** and a second lens portion **24.** The reflecting portion **14** is arranged on a front side of the display element **12,** that is, on the display surface **12a** side thereof, and can reflect light emitted from the display element **12.** The first lens portion **16** is arranged on an optical path between the display element **12** and the reflecting portion **14,** and the half mirror **18** is arranged between the display element **12** and the first lens portion **16.** The first retardation member **20** is arranged on an optical path between the display element **12** and the half mirror **18,** and the second retardation member **22** is arranged on an optical path between the half mirror **18** and the reflecting portion **14.**

The half mirror and the constituents arranged on the front side thereof (in the illustrated example, the half mirror **18,** the first lens portion **16,** the second retardation member **22,** the reflecting portion **14,** and the second lens portion **24)** are sometimes collectively referred to as "lens unit (lens unit **4**)."

The display element **12** is, for example, a liquid crystal display or an organic EL display, and has a display surface **12a** for displaying an image. The light to be emitted from the display surface **12a** passes through, for example, a polarizing member (typically, a polarizing film) that may be incorporated into the display element **12** to be emitted as first linearly polarized light.

The first retardation member **20** is a $\lambda/4$ member that can convert the first linearly polarized light, which has entered the first retardation member **20,** into first circularly polarized light (the first retardation member is hereinafter sometimes referred to as "first $\lambda/4$ member"). The first retardation member **20** may be arranged integrally with the display element **12.**

The half mirror **18** transmits the light emitted from the display element **12,** and reflects the light reflected by the reflecting portion **14** toward the reflecting portion **14.** The half mirror **18** is arranged integrally with the first lens portion **16.**

The second retardation member **22** is a $\lambda/4$ member that enables the light, which has been reflected by the reflecting portion **14** and the half mirror **18,** to penetrate through the reflecting portion **14** including a reflection-type polarizing member (the second retardation member is hereinafter sometimes referred to as "second $\lambda/4$ member"). The second retardation member **22** may be arranged integrally with the first lens portion **16,** or may be arranged integrally with the reflection-type polarizing member in the reflecting portion **14.**

The first circularly polarized light emitted from the first $\lambda/4$ member **20** passes through the half mirror **18** and the first lens portion **16,** and is converted into second linearly polarized light by the second $\lambda/4$ member **22.** The second linearly polarized light emitted from the second $\lambda/4$ member **22** is reflected toward the half mirror **18** without penetrating through the reflection-type polarizing member in the reflecting portion **14.** At this time, the polarization direction of the second linearly polarized light that has entered the reflection-type polarizing member in the reflecting portion **14** is the same direction as that of the reflection axis of the reflection-type polarizing member. Accordingly, the second linearly polarized light that has entered the reflecting portion is reflected by the reflection-type polarizing member.

The second linearly polarized light reflected by the reflecting portion **14** is converted into second circularly polarized light by the second $\lambda/4$ member **22,** and the second circularly polarized light emitted from the second $\lambda/4$ member **22** passes through the first lens portion **16,** and is reflected by the half mirror **18.** The second circularly polarized light reflected by the half mirror **18** passes through the first lens portion **16,** and is converted into third linearly polarized light by the second $\lambda/4$ member **22.** The third linearly polarized light penetrates through the reflection-type polarizing member in the reflecting portion **14.** At this time, the polarization direction of the third linearly polarized light that has entered the reflection-type polarizing member in the reflecting portion **14** is the same direction as that of the transmission axis of the reflection-type polarizing member. Accordingly, the third linearly polarized light that has entered the reflecting portion **14** penetrates through the reflection-type polarizing member.

The light that has penetrated through the reflecting portion **14** passes through the second lens portion **24** to enter an eye **26** of a user.

For example, the absorption axis of the polarizing member in the display element **12** and the reflection axis of the reflection-type polarizing member in the reflecting portion **14** may be arranged substantially parallel to each other, or may be arranged substantially perpendicular to each other. An angle formed by the absorption axis of the polarizing member in the display element **12** and the slow axis of the first retardation member **20** is, for example, from 40° to 50°, and may be from 42° to 48°, or may be about 45°. An angle formed by the absorption axis of the polarizing member in the display element **12** and the slow axis of the second retardation member **22** is, for example, from 40° to 50°, and may be from 42° to 48°, or may be about 45°.

The in-plane retardation Re(550) of the first retardation member **20** is, for example, from 100 nm to 190 nm, and may be from 110 nm to 180 nm, may be from 130 nm to 160 nm, or may be from 135 nm to 155 nm.

The first retardation member **20** preferably shows such a reverse wavelength dispersion characteristic that its retardation value increases with an increase in wavelength of measurement light. The ratio "Re(450)/Re(550)" of the first retardation member **20** is, for example, 0.75 or more and less than 1, and may be 0.8 or more and 0.95 or less.

The in-plane retardation Re(550) of the second retardation member **22** is, for example, from 100 nm to 190 nm, and may be from 110 nm to 180 nm, may be from 130 nm to 160 nm, or may be from 135 nm to 155 nm.

The second retardation member **22** preferably shows such a reverse wavelength dispersion characteristic that its retardation value increases with an increase in wavelength of measurement light. The ratio "Re(450)/Re(550)" of the second retardation member **22** is, for example, 0.75 or more and less than 1, and may be 0.8 or more and 0.95 or less.

The respective retardation members are each formed from any appropriate material. For example, the retardation member may be a resin film (typically, a stretched film), or may be formed from a liquid crystal compound. When the retardation member is a resin film, the thickness thereof is, for example, from 10 um to 100 $\mu$m.

A resin that may be incorporated into the resin film is, for example, a polycarbonate-based resin, a polyester carbonate-based resin, a polyester-based resin, a polyvinyl acetal-based resin, a polyarylate-based resin, a cyclic olefin-based resin, a cellulose-based resin, a polyvinyl alcohol-based resin, a polyamide-based resin, a polyimide-based resin, a polyether-based resin, a polystyrene-based resin, or an acrylic resin. Those resins may be used alone or in combination thereof (e.g., as a blend or copolymer thereof). For example, a resin film containing a polycarbonate-based resin or a polyester carbonate-based resin (hereinafter sometimes simply referred to as "polycarbonate-based resin") may be suitably used. When such resin is used, for example, the reverse wavelength dispersion characteristic can be shown.

Any appropriate polycarbonate-based resin may be used as the polycarbonate-based resin. For example, the polycarbonate-based resin includes a structural unit derived from a fluorene-based dihydroxy compound, a structural unit derived from an isosorbide-based dihydroxy compound, and a structural unit derived from at least one dihydroxy compound selected from the group consisting of: an alicyclic diol; an alicyclic dimethanol; di-, tri-, or polyethylene glycol; and an alkylene glycol or a spiroglycol. The polycarbonate-based resin preferably includes a structural unit derived from a fluorene-based dihydroxy compound, a structural unit derived from an isosorbide-based dihydroxy compound, and a structural unit derived from an alicyclic dimethanol and/or a structural unit derived from di-, tri-, or polyethylene glycol, and more preferably includes a structural unit derived from a fluorene-based dihydroxy compound, a structural unit derived from an isosorbide-based dihydroxy compound, and a structural unit derived from di-, tri-, or polyethylene glycol. The polycarbonate-based resin may include a structural unit derived from any other dihydroxy compound as required. Details about the polycarbonate-based resin that may be suitably used in the retardation member and a method of forming the retardation member are described in, for example, JP 2014-10291 A, JP 2014-26266 A, JP 2015-212816 A, JP 2015-212817 A, and JP 2015-212818 A, the descriptions of which are incorporated herein by reference.

An absorption-type polarizing member may be arranged on the front side of the reflection-type polarizing member. The absorption-type polarizing member may be typically arranged between the reflection-type polarizing member and the second lens portion **24**. The reflection axis of the reflection-type polarizing member and the absorption axis of the absorption-type polarizing member may be arranged substantially parallel to each other, and the transmission axis of the reflection-type polarizing member and the transmission axis of the absorption-type polarizing member may be arranged substantially parallel to each other. The absorption-type polarizing member may be included in the reflecting portion **14**. When the reflecting portion **14** includes the absorption-type polarizing member, the reflecting portion **14** may include a laminate including the reflection-type polarizing member and the absorption-type polarizing member.

FIG. **2** is a schematic sectional view for illustrating an example of the laminate to be used in the reflecting portion of the display system illustrated in FIG. **1**. A laminate **30** includes a reflection-type polarizing member **32** and an absorption-type polarizing member **34,** and the reflection-type polarizing member **32** and the absorption-type polarizing member **34** are laminated via an adhesion layer **36**. The use of the adhesion layer fixes the reflection-type polarizing member **32** and the absorption-type polarizing member **34** to each other, and hence can prevent a shift in the axial arrangement of the reflection axis of the member **32** and the absorption axis of the member **34** (the transmission axis of the member **32** and the transmission axis of the member **34**). In addition, the use of the layer can suppress an adverse effect due to an air layer that may be formed between the reflection-type polarizing member **32** and the absorption-type polarizing member **34.** The adhesion layer **36** may be formed from an adhesive, or may be formed from a pressure-sensitive adhesive. The thickness of the adhesion layer **36** is, for example, from 0.05 um to 30 $\mu$m, preferably from 3 um to 20 $\mu$m, more preferably from 5 um to 15 um. The second retardation member **22** may be arranged integrally with the reflection-type polarizing member **32,** and hence the laminate **30** may include the second retardation member **22,** though the integrated arrangement is not shown. In this case, the second retardation member **22** may be laminated on the reflection-type polarizing member **32** via an adhesion layer.

The reflection-type polarizing member can transmit polarized light (typically, linearly polarized light) parallel to its transmission axis while maintaining the polarization state of the light, and can reflect light in any other polarization state. The reflection-type polarizing member typically includes a film having a multilayer structure (sometimes referred to as "reflection-type polarizing film"). In this case, the thickness of the reflection-type polarizing member is, for example, from 10 um to 150 $\mu$m, preferably from 20 um to 100 $\mu$m, more preferably from 30 um to 60 $\mu$m.

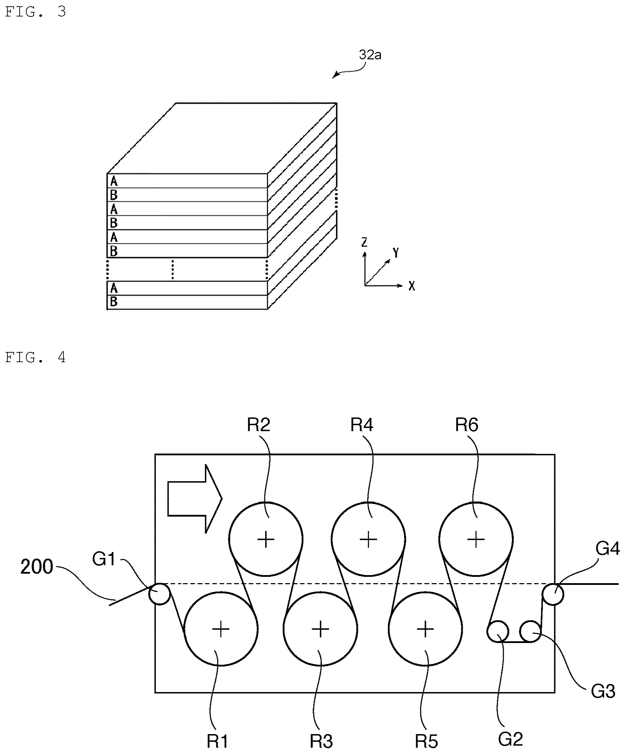

FIG. **3** is a schematic perspective view for illustrating an example of the multilayer structure in the reflection-type polarizing film. A multilayer structure **32a** alternately includes a layer A having birefringence and a layer B substantially free of birefringence. The total number of the layers for forming the multilayer structure may be from 50 to 1,000. For example, the refractive index nx of the A layer in an x-axis direction is larger than the refractive index ny thereof in a y-axis direction, the refractive index nx of the B layer in the x-axis direction and the refractive index ny thereof in the y-axis direction are substantially identical to each other, and a difference in refractive index between the A layer and the B layer is large in the x-axis direction, and is substantially zero in the y-axis direction. As a result, the x-axis direction may serve as a reflection axis, and the y-axis direction may serve as a transmission axis. The difference in refractive index between the A layer and the B layer in the x-axis direction is preferably from 0.2 to 0.3.

The A layer typically includes a material that expresses birefringence by being stretched. Examples of such material include a naphthalene dicarboxylic acid polyester (e.g., polyethylene naphthalate), polycarbonate, and an acrylic resin (e.g., polymethyl methacrylate). The B layer typically includes a material that is substantially free from expressing birefringence even when stretched. Such material is, for example, a copolyester of naphthalene dicarboxylic acid and terephthalic acid. The multilayer structure may be formed by combining coextrusion and stretching. For example, the material for forming the A layer and the material for forming the B layer are extruded, and are then multilayered (with, for example, a multiplier). Next, the resultant multilayer laminate is stretched. The x-axis direction in the illustrated example may correspond to the stretching direction.

A commercial product of the reflection-type polarizing film is, for example, a product available under the product name "DBEF" or "APF" from 3M Company, or a product available under the product name "APCF" from Nitto Denko Corporation.

The cross transmittance (Tc) of the reflection-type polarizing member (reflection-type polarizing film) may be, for example, from 0.01% to 3%. The single layer transmittance (Ts) of the reflection-type polarizing member (reflection-type polarizing film) is, for example, from 43% to 49%, preferably from 45% to 47%. The polarization degree (P) of the reflection-type polarizing member (reflection-type polarizing film) may be, for example, from 92% to 99.99%.

The single layer transmittance (Ts) is typically measured with a UV-visible spectrophotometer. The polarization degree (P) is typically determined from the following equation on the basis of a parallel transmittance (Tp) and a cross transmittance (Tc) obtained through measurement with the UV-visible spectrophotometer and visibility correction. The Ts, the Tp, and the Tc are each a Y value measured with the two-degree field of view (C light source) of JIS Z 8701 and subjected to visibility correction.

$$\texttt{Polarization degree (P)=\{(Tp-Tc)/(Tp+Tc)\}}^{1/2}\texttt{×100}$$

The absorption-type polarizing member may typically include a resin film containing a dichroic substance (sometimes referred to as "absorption-type polarizer" or simply "polarizer"). The polarizing member preferably includes a polyvinyl alcohol (PVA)-based film containing iodine. The thickness of the absorption-type polarizer is preferably 1 um or more and 8 um or less, more preferably 7 um or less, still more preferably 5 um or less. When the absorption-type polarizer having such thickness is used, its shrinkage that may be caused by an environmental change (e.g., a temperature change) is suppressed, and hence an excellent display characteristic can be maintained. Specifically, in the display system, slight shrinkage of a member may be responsible for the distortion of an image, and hence the use of the absorption-type polarizer having such thickness can suppress the distortion of an image to be displayed in an extremely satisfactory manner.

The ratio of the thickness of the absorption-type polarizer to the thickness of the reflection-type polarizing member is preferably 15% or less, more preferably 10% or less. The ratio of the thickness of the absorption-type polarizer to the total of the thickness of the second retardation member, the thickness of the reflection-type polarizing member, and the thickness of the absorption-type polarizing member is preferably 10% or less, more preferably 5% or less.

The cross transmittance (Tc) of the absorption-type polarizing member (absorption-type polarizer) is preferably 0.5% or less, more preferably 0.1% or less, still more preferably 0.05% or less. The single layer transmittance (Ts) of the absorption-type polarizing member (absorption-type polarizer) is, for example, from 41.0% to 45.0%, preferably 42.0% or more. The polarization degree (P) of the absorption-type polarizing member (absorption-type polarizer) is, for example, from 99.0% to 99.997%, preferably 99.9% or more. The combination of the absorption-type polarizing member with the reflection-type polarizing member can achieve an excellent display characteristic. For example, a user can be suppressed from viewing a residual image (ghost).

A method of producing the absorption-type polarizer according to one embodiment includes: forming a polyvinyl alcohol-based resin layer (PVA-based resin layer) containing a halide and a polyvinyl alcohol-based resin (PVA-based resin) on one side of an elongate thermoplastic resin substrate to provide a laminate; and subjecting the laminate to in-air auxiliary stretching treatment, dyeing treatment, underwater stretching treatment, and drying shrinkage treatment, which includes heating the laminate, while conveying the laminate in its lengthwise direction, to shrink the laminate by 2% or more in its widthwise direction, in the stated order. The content of the halide in the PVA-based resin layer is preferably from 5 parts by weight to 20 parts by weight with respect to 100 parts by weight of the PVA-based resin. A stretching ratio in the in-air auxiliary stretching treatment is preferably 2.0 times or more. The drying shrinkage treatment is preferably performed with heated rolls, and the temperature of each of the heated rolls is preferably from 60°C to 120°C. The shrinkage ratio of the laminate in the widthwise direction by the drying shrinkage treatment is preferably 2% or more. When the laminate including the PVA-based resin layer containing the halide is produced, multi-stage stretching including the in-air auxiliary stretching and the underwater stretching is adopted as the stretching of the laminate, and the laminate after the stretching is heated with the heated rolls, a polarizer, which has excellent optical characteristics (typically, a single layer transmittance and a polarization degree), and in which variations in optical characteristics are suppressed, can be obtained. Specifically, when the heated rolls are used in the drying shrinkage treatment step, the entirety of the laminate can be uniformly shrunk while the laminate is conveyed. Thus, the optical characteristics of the polarizer to be obtained can be improved. In addition, a polarizer excellent in optical characteristics can be stably produced, and variations in optical characteristics (particularly, a single layer transmittance) of the polarizer can be suppressed.

Any appropriate method may be adopted as a method of producing the laminate of the thermoplastic resin substrate and the PVA-based resin layer. A preferred method involves: applying an application liquid containing the halide and the PVA-based resin to the surface of the thermoplastic resin substrate; and drying the liquid to form the PVA-based resin layer on the thermoplastic resin substrate. As described above, the content of the halide in the PVA-based resin layer is preferably from 5 parts by weight to 20 parts by weight with respect to 100 parts by weight of the PVA-based resin.

Any appropriate method may be adopted as a method of applying the application liquid. Examples thereof include a roll coating method, a spin coating method, a wire bar coating method, a dip coating method, a die coating method, a curtain coating method, a spray coating method, and a knife coating method (e.g., a comma coating method). The temperature at which the application liquid is applied and dried is preferably 50°C or more.

The thickness of the PVA-based resin layer is preferably from 3 um to 40 $\mu$m, more preferably from 3 um to 20 $\mu$m.

Before the formation of the PVA-based resin layer, the thermoplastic resin substrate may be subjected to surface treatment (e.g., corona treatment), or an easy-adhesion layer may be formed on the thermoplastic resin substrate. The performance of such treatment can improve adhesiveness between the thermoplastic resin substrate and the PVA-based resin layer.

The thickness of the thermoplastic resin substrate is preferably from 20 um to 300 $\mu$m, more preferably from 50 um to 200 um. When the thickness is less than 20 $\mu$m, it may be difficult to form the PVA-based resin layer. When the thickness is more than 300 $\mu$m, in, for example, the underwater stretching treatment to be described later, it may take a long time for the thermoplastic resin substrate to absorb water, and an excessively large load may be needed for its stretching.

The water absorption ratio of the thermoplastic resin substrate is preferably 0.2% or more, more preferably 0.3% or more. The thermoplastic resin substrate absorbs water, and the water may act like a plasticizer to plasticize the substrate. As a result, the substrate can be largely reduced in stretching stress and hence can be stretched at a high ratio. Meanwhile, the water absorption ratio of the thermoplastic resin substrate is preferably 3.0% or less, more preferably 1.0% or less. When such thermoplastic resin substrate is used, an inconvenience such as the deterioration of the external appearance of the polarizer to be obtained due to a significant reduction in dimensional stability of the thermoplastic resin substrate at the time of the production of the polarizer can be prevented. In addition, the rupture of the substrate and the peeling of the PVA-based resin layer from the thermoplastic resin substrate can be prevented at the time of the underwater stretching. The water absorption ratio of the thermoplastic resin substrate may be adjusted by, for example, introducing a modifying group into the constituent material for the substrate. The water absorption ratio is a value determined in conformity with JIS K 7209.

The glass transition temperature (Tg) of the thermoplastic resin substrate is preferably 120°C or less. The use of such thermoplastic resin substrate can sufficiently secure the stretchability of the laminate while suppressing the crystallization of the PVA-based resin layer. Further, in consideration of the plasticization of the thermoplastic resin substrate by water and satisfactory performance of the underwater stretching, the temperature is more preferably 100°C or less, still more preferably 90°C or less. Meanwhile, the glass transition temperature of the thermoplastic resin substrate is preferably 60°C or more. When such thermoplastic resin substrate is used, an inconvenience such as the deformation of the thermoplastic resin substrate (e.g., the occurrence of unevenness, a sag, or a wrinkle) at the time of the application and drying of the application liquid containing the PVA-based resin is prevented, and hence the laminate can be satisfactorily produced. In addition, the stretching of the PVA-based resin layer can be satisfactorily performed at a suitable temperature (e.g., about 60°C). The glass transition temperature of the thermoplastic resin substrate may be adjusted by, for example, introducing a modifying group into the constituent material for the substrate or heating the substrate with a crystallizing material. The glass transition temperature (Tg) is a value determined in conformity with JIS K 7121.

Any appropriate thermoplastic resin may be adopted as the constituent material for the thermoplastic resin substrate. Examples of the thermoplastic resin include: ester-based resins such as a polyethylene terephthalate-based resin; cycloolefin-based resins such as a norbornene-based resin; olefin-based resins such as polypropylene; polyamide-based resins; polycarbonate-based resins; and copolymer resins thereof. Of those, a norbornene-based resin and an amorphous polyethylene terephthalate-based resin are preferred.

In one embodiment, an amorphous (not crystallized) polyethylene terephthalate-based resin is preferably used. Of those, a non-crystalline (hardly crystallized) polyethylene terephthalate-based resin is particularly preferably used. Specific examples of the non-crystalline polyethylene terephthalate-based resin include: a copolymer further containing isophthalic acid and/or cyclohexanedicarboxylic acid as a dicarboxylic acid; and a copolymer further containing cyclohexane dimethanol or diethylene glycol as a glycol.

In a preferred embodiment, the thermoplastic resin substrate includes a polyethylene terephthalate-based resin having an isophthalic acid unit. This is because such thermoplastic resin substrate is extremely excellent in stretchability and can be suppressed in crystallization at the time of its stretching. This may result from large bending applied to the main chain of the resin by the introduction of the isophthalic acid unit. The polyethylene terephthalate-based resin has a terephthalic acid unit and an ethylene glycol unit. The content ratio of the isophthalic acid unit is preferably 0.1 mol% or more, more preferably 1.0 mol% or more with respect to the total of all repeating units. This is because a thermoplastic resin substrate extremely excellent in stretchability is obtained. Meanwhile, the content ratio of the isophthalic acid unit is preferably 20 mol% or less, more preferably 10 mol% or less with respect to the total of all the repeating units. When the content ratio is set as described above, the crystallization degree of the substrate can be satisfactorily increased in the drying shrinkage treatment to be described later.

The thermoplastic resin substrate may be stretched in advance (before the formation of the PVA-based resin layer). In one embodiment, the thermoplastic resin substrate is stretched in the lateral direction of the thermoplastic resin substrate having an elongate shape. The lateral direction is preferably a direction perpendicular to the stretching direction of the laminate to be described later. The term "perpendicular" as used herein includes a case in which the directions are substantially perpendicular to each other. Herein, the phrase "substantially perpendicular" includes a case in which an angle formed by the directions is 90°±5.0°, and the angle is preferably 90°±3.0°, more preferably 90°±1.0°.

The stretching temperature of the thermoplastic resin substrate is preferably from Tg-10°C to Tg+50° with respect to the glass transition temperature (Tg). The stretching ratio of the thermoplastic resin substrate is preferably from 1.5 times to 3.0 times.

Any appropriate method may be adopted as a method of stretching the thermoplastic resin substrate. Specifically, the method may be fixed-end stretching or free-end stretching. A stretching mode may be dry or wet. The stretching of the thermoplastic resin substrate may be performed in one stage, or may be performed in a plurality of stages. When the stretching is performed in a plurality of stages, the stretching ratio is the product of stretching ratios at the respective stages.

As described above, the application liquid contains the halide and the PVA-based resin. The application liquid is typically a solution obtained by dissolving the halide and the PVA-based resin in a solvent. Examples of the solvent include water, dimethyl sulfoxide, dimethylformamide, dimethylacetamide, N-methylpyrrolidone, polyhydric alcohols, such as various glycols and trimethylolpropane, and amines, such as ethylenediamine and diethylenetriamine. Those solvents may be used alone or in combination thereof. Of those, water is preferred. The PVA-based resin concentration of the solution is preferably from 3 parts by weight to 20 parts by weight with respect to 100 parts by weight of the solvent. Such resin concentration enables the formation of a uniform applied film in close contact with the thermoplastic resin substrate. The content of the halide in the application liquid is preferably from 5 parts by weight to 20 parts by weight with respect to 100 parts by weight of the PVA-based resin.

The application liquid may be blended with an additive. Examples of the additive include a plasticizer and a surfactant. Examples of the plasticizer include polyhydric alcohols, such as ethylene glycol and glycerin. The surfactant is, for example, a nonionic surfactant. Those additives may be used for the purpose of further improving the uniformity, dyeing property, and stretchability of the PVA-based resin layer to be obtained.

Any appropriate resin may be adopted as the PVA-based resin. Examples thereof include polyvinyl alcohol and an ethylene-vinyl alcohol copolymer. The polyvinyl alcohol is obtained by saponifying polyvinyl acetate. The ethylene-vinyl alcohol copolymer is obtained by saponifying an ethylene-vinyl acetate copolymer. The saponification degree of the PVA-based resin is typically from 85 mol% to 100 mol%, preferably from 95.0 mol% to 99.95 mol%, more preferably from 99.0 mol% to 99.93 mol%. The saponification degree may be determined in conformity with JIS K 6726-1994. The use of a PVA-based resin having such saponification degree can provide a polarizer excellent in durability. When the saponification degree is excessively high, the resin may gel.

The average polymerization degree of the PVA-based resin may be appropriately selected in accordance with purposes. The average polymerization degree is typically from 1,000 to 10,000, preferably from 1,200 to 4,500, more preferably from 1,500 to 4,300. The average polymerization degree may be determined in conformity with JIS K 6726-1994.

Any appropriate halide may be adopted as the halide. Examples thereof include an iodide and sodium chloride. Examples of the iodide include potassium iodide, sodium iodide, and lithium iodide. Of those, potassium iodide is preferred.

The amount of the halide in the application liquid is preferably from 5 parts by weight to 20 parts by weight with respect to 100 parts by weight of the PVA-based resin, and is more preferably from 10 parts by weight to 15 parts by weight with respect to 100 parts by weight of the PVA-based resin. When the amount of the halide with respect to 100 parts by weight of the PVA-based resin is more than 20 parts by weight, the halide may bleed out to make the polarizer to be finally obtained clouded.

In general, the stretching of the PVA-based resin layer improves the orientation properties of polyvinyl alcohol molecules in the PVA-based resin, but the immersion of the PVA-based resin layer after the stretching in a liquid containing water may disturb the orientation of the polyvinyl alcohol molecules to reduce the orientation properties. In particular, when the laminate of the thermoplastic resin substrate and the PVA-based resin layer is stretched in a boric acid solution, and the laminate is stretched in the boric acid solution at relatively high temperature in order that the stretching of the thermoplastic resin substrate may be stabilized, the tendency of the reductions in orientation properties becomes remarkable. For example, while the stretching of a PVA film alone in a boric acid solution is generally performed at 60°C, the stretching of the laminate of the A-PET (thermoplastic resin substrate) and the PVA-based resin layer is performed at a temperature as high as a temperature of around 70°C. In this case, the orientation properties of the PVA molecules at the initial stage of the stretching may reduce at a stage before the orientation properties are improved by the underwater stretching. In contrast, when the laminate of the PVA-based resin layer containing the halide and the thermoplastic resin substrate is produced and the laminate is stretched in air at high temperature (auxiliary stretching) before being stretched in the boric acid solution, the crystallization of the PVA-based resin in the PVA-based resin layer of the laminate after the auxiliary stretching may be accelerated. As a result, the disturbance of the orientation of the polyvinyl alcohol molecules and reductions in orientation properties thereof in the case where the PVA-based resin layer is immersed in a liquid can be suppressed as compared to those in the case where the PVA-based resin layer is free of the halide. Thus, the optical characteristics of the polarizer to be obtained through treatment steps performed by immersing the laminate in a liquid, such as the dyeing treatment and the underwater stretching treatment, can be improved.

In particular, in order that high optical characteristics may be obtained, a two-stage stretching method in which the dry stretching (auxiliary stretching) and the in-boric-acid-solution stretching are combined is selected. When the auxiliary stretching is introduced like the two-stage stretching, the laminate can be stretched while the crystallization of the thermoplastic resin substrate is suppressed. Accordingly, a problem in that the stretchability of the laminate is reduced by excessive crystallization of the thermoplastic resin substrate in the subsequent in-boric-acid-solution stretching is solved, and hence the laminate can be stretched at a higher ratio. Further, in the case where the PVA-based resin is applied onto the thermoplastic resin substrate, in order that an influence of the glass transition temperature of the thermoplastic resin substrate may be suppressed, an application temperature needs to be reduced as compared to that in the case where the PVA-based resin is applied onto a typical metal drum. As a result, there may occur a problem in that the crystallization degree of the PVA-based resin becomes relatively low and hence sufficient optical characteristics are not obtained. In contrast, when the auxiliary stretching is introduced, even in the case where the PVA-based resin is applied onto the thermoplastic resin substrate, the crystallinity of the PVA-based resin can be improved, and hence high optical characteristics can be achieved. In addition, at the same time, when the orientation property of the PVA-based resin is improved in advance, problems, such as a reduction in orientation property of the PVA-based resin and the dissolution thereof, at the time of the immersion of the laminate in water in the subsequent dyeing step or stretching step can be prevented, and hence high optical characteristics can be achieved.

A stretching method for the in-air auxiliary stretching may be fixed-end stretching (e.g., a method involving stretching the laminate with a tenter stretching machine), or may be free-end stretching (e.g., a method involving passing the laminate between rolls having different peripheral speeds to uniaxially stretch the laminate). The free-end stretching may be actively adopted in order that high optical characteristics may be obtained. In one embodiment, the in-air stretching treatment includes a heated roll stretching step of stretching the laminate with a difference in peripheral speed between heated rolls while conveying the laminate in its lengthwise direction. The in-air stretching treatment typically includes a zone stretching step and the heated roll stretching step. The order of the zone stretching step and the heated roll stretching step is not limited, and the zone stretching step may be performed in advance, or the heated roll stretching step may be performed in advance. The zone stretching step may be omitted. In one embodiment, the zone stretching step and the heated roll stretching step are performed in the stated order. In addition, in another embodiment, the laminate is stretched by gripping a film end portion in a tenter stretching machine and extending a distance between tenters in a flow direction (the extension of the distance between the tenters corresponds to a stretching ratio). At this time, the distance between the tenters in the widthwise direction of the laminate (direction perpendicular to the flow direction) is set so that the tenters may be appropriately close to each other. The distance may be preferably set so that the stretching ratio of the laminate in the flow direction may be closer to that in the free-end stretching. In the case of the free-end stretching, the shrinkage ratio of the laminate in the widthwise direction is calculated from the equation "shrinkage ratio in widthwise direction= $(1/\text{stretching ratio})^{1/2}$."

The in-air auxiliary stretching may be performed in one stage, or may be performed in a plurality of stages. When the in-air auxiliary stretching is performed in a plurality of stages, the stretching ratio is the product of stretching ratios at the respective stages. It is preferred that the stretching direction of the laminate in the in-air auxiliary stretching be substantially identical to the stretching direction thereof in the underwater stretching.

The stretching ratio in the in-air auxiliary stretching is preferably from 2.0 times to 3.5 times. The maximum stretching ratio when the in-air auxiliary stretching and the underwater stretching are combined is preferably 5.0 times or more, more preferably 5.5 times or more, still more preferably 6.0 times or more with respect to the original length of the laminate. The term "maximum stretching ratio" as used herein refers to a stretching ratio immediately before the rupture of the laminate, and refers to a value lower than a value, which is obtained by separately identifying the stretching ratio at which the laminate ruptures, by 0.2.

A stretching temperature in the in-air auxiliary stretching may be set to any appropriate value depending on a material for forming the thermoplastic resin substrate, a stretching mode, and the like. The stretching temperature is preferably equal to or higher than the glass transition temperature (Tg) of the thermoplastic resin substrate, is more preferably higher than the glass transition temperature (Tg) of the thermoplastic resin substrate by 10°C or more, and is particularly preferably higher than the Tg by 15°C or more. Meanwhile, the upper limit of the stretching temperature is preferably 170°C. When the stretching is performed at such temperature, rapid progress of the crystallization of the PVA-based resin can be suppressed to suppress an inconvenience due to the crystallization (e.g., inhibition of the alignment of the PVA-based resin layer through the stretching). The crystallization index of the PVA-based resin after the in-air auxiliary stretching is preferably from 1.3 to 1.8, more preferably from 1.4 to 1.7. The crystallization index of the PVA-based resin may be measured by an ATR method with a Fourier transform infrared spectrophotometer. Specifically, the measurement is performed by using polarized light as measurement light, and intensities at 1,141 cm$^{-1}$ and 1,440 cm$^{-1}$ in the resultant spectrum are used to calculate a crystallization index in accordance with the following equation:

$$\texttt{Crystallization index} = (I_C/I_R)$$

where:

$I_C$ represents the intensity at 1,141 cm$^{-1}$ at the time of the measurement with the incidence of the measurement light; and
$I_R$ represents the intensity at 1,440 cm$^{-1}$ at the time of the measurement with the incidence of the measurement light.

Insolubilizing treatment is performed after the in-air auxiliary stretching treatment and before the underwater stretching treatment or the dyeing treatment as required. The insolubilizing treatment is typically performed by immersing the PVA-based resin layer in an aqueous solution of boric acid. When the insolubilizing treatment is performed, water resistance is imparted to the PVA-based resin layer, and hence reductions in orientation properties of the PVA molecules at the time of their immersion in water can be prevented. The concentration of the aqueous solution of boric acid is preferably from 1 part by weight to 4 parts by weight with respect to 100 parts by weight of water. The liquid temperature of the insolubilizing bath (aqueous solution of boric acid) is preferably from 20°C to 50°C.

The dyeing treatment is typically performed by dyeing the PVA-based resin layer with iodine. Specifically, the dyeing treatment is performed by causing the PVA-based resin layer to adsorb iodine. A method for the adsorption is, for example, a method involving immersing the PVA-based resin layer (laminate) in a dyeing liquid containing iodine, a method involving applying the dyeing liquid to the PVA-based resin layer, or a method involving spraying the PVA-based resin layer with the dyeing liquid. Of those, a method involving immersing the laminate in the dyeing liquid (dyeing bath) is preferred. This is because iodine can satisfactorily adsorb to the PVA-based resin layer.

The dyeing liquid is preferably an aqueous solution of iodine. The blending amount of iodine is preferably from 0.05 part by weight to 0.5 part by weight with respect to 100 parts by weight of water. The aqueous solution of iodine is preferably blended with an iodide for improving the solubility of iodine in water. Examples of the iodide include potassium iodide, lithium iodide, sodium iodide, zinc iodide, aluminum iodide, lead iodide, copper iodide, barium iodide, calcium iodide, tin iodide, and titanium iodide. Of those, potassium iodide is preferred. The blending amount of the iodide is preferably from 0.1 part by weight to 10 parts by weight, more preferably from 0.3 part by weight to 5 parts by weight with respect to 100 parts by weight of water. The liquid temperature of the dyeing liquid at the time of the dyeing is preferably from 20°C to 50°C for suppressing the dissolution of the PVA-based resin. When the PVA-based resin layer is immersed in the dyeing liquid, an immersion time is preferably from 5 seconds to 5 minutes, more preferably from 30 seconds to 90 seconds for securing the transmittance of the PVA-based resin layer.

The dyeing conditions (the concentration, the liquid temperature, and the immersion time) may be set so that the single layer transmittance and the polarization degree of the polarizer to be finally obtained may fall within the above-mentioned ranges. To achieve such dyeing conditions, it is preferred that an aqueous solution of iodine be used as the dyeing liquid, and a content ratio between iodine and potassium iodide in the aqueous solution of iodine be set to from 1:5 to 1:20. The content ratio between iodine and potassium iodide in the aqueous solution of iodine is preferably from 1:5 to 1:10. Thus, a polarizer having such optical characteristics as described above can be obtained.

When the dyeing treatment is performed continuously after treatment including immersing the laminate in a treatment bath containing boric acid (typically, the insolubilizing treatment), boric acid in the treatment bath may be mixed into the dyeing bath to change the boric acid concentration of the dyeing bath with time, thereby resulting in the destabilization of the dyeing property of the dyeing bath. To suppress such destabilization of the dyeing property as described above, the upper limit of the boric acid concentration of the dyeing bath is adjusted to preferably 4 parts by weight, more preferably 2 parts by weight with respect to 100 parts by weight of water. Meanwhile, the lower limit of the boric acid concentration of the dyeing bath is preferably 0.1 part by weight, more preferably 0.2 part by weight, still more preferably 0.5 part by weight with respect to 100 parts by weight of water. In one embodiment, the dyeing treatment is performed with a dyeing bath blended with boric acid in advance. Thus, the ratio at which the boric acid concentration changes when boric acid in the treatment bath is mixed into the dyeing bath can be reduced. The blending amount of boric acid to be blended into the dyeing bath in advance (i.e., the content of boric acid that is not derived from the treatment bath) is preferably from 0.1 part by weight to 2 parts by weight, more preferably from 0.5 part by weight to 1.5 parts by weight with respect to 100 parts by weight of water.

Cross-linking treatment is performed after the dyeing treatment and before the underwater stretching treatment as required. The cross-linking treatment is typically performed by immersing the PVA-based resin layer in an aqueous solution of boric acid. When the cross-linking treatment is performed, water resistance is imparted to the PVA-based resin layer, and hence reductions in orientation properties of the PVA molecules at the time of their immersion in high-temperature water in the subsequent underwater stretching can be prevented. The concentration of the aqueous solution of boric acid is preferably from 1 part by weight to 5 parts by weight with respect to 100 parts by weight of water. In addition, when the cross-linking treatment is performed after the dyeing treatment, the aqueous solution of boric acid is preferably further blended with an iodide. The blending of the aqueous solution with the iodide can suppress the elution of iodine that the PVA-based resin layer has been caused to adsorb. The blending amount of the iodide is preferably from 1 part by weight to 5 parts by weight with respect to 100 parts by weight of water. Specific examples of the iodide are as described above. The liquid temperature of the cross-linking bath (aqueous solution of boric acid) is preferably from 20°C to 50°C.

The underwater stretching treatment is performed by immersing the laminate in a stretching bath. According to the underwater stretching treatment, the laminate can be stretched at a temperature lower than the glass transition temperature of the thermoplastic resin substrate or the PVA-based resin layer (typically, about 80°C), and hence the PVA-based resin layer can be stretched at a high ratio while its crystallization is suppressed. As a result, a polarizer having excellent optical characteristics can be produced.

Any appropriate method may be adopted as a method of stretching the laminate. Specifically, the method may be fixed-end stretching, or may be free-end stretching (e.g., a method involving passing the laminate between rolls having different peripheral speeds to uniaxially stretch the laminate). Of those, free-end stretching is preferably selected. The stretching of the laminate may be performed in one stage, or may be performed in a plurality of stages. When the stretching is performed in a plurality of stages, the stretching ratio (maximum stretching ratio) of the laminate to be described later is the product of stretching ratios at the respective stages.

The underwater stretching is preferably performed by immersing the laminate in an aqueous solution of boric acid (in-boric-acid-solution stretching). The use of the aqueous solution of boric acid as the stretching bath can impart, to the PVA-based resin layer, rigidity with which the layer withstands tension to be applied at the time of the stretching and water resistance preventing the layer from dissolving in water. Specifically, boric acid can produce a tetrahydroxyboric acid anion in the aqueous solution to cross-link with the PVA-based resin through a hydrogen bond. As a result, the rigidity and the water resistance are imparted to the PVA-based resin layer, and hence the layer can be satisfactorily stretched. Thus, a polarizer having excellent optical characteristics can be produced.

The aqueous solution of boric acid is preferably obtained by dissolving boric acid and/or a borate in water serving as a solvent. The boric acid concentration of the aqueous solution of boric acid is preferably from 1 part by weight to 10 parts by weight, more preferably from 3.5 parts by weight to 7 parts by weight, particularly preferably from 4 parts by weight to 6 parts by weight with respect to 100 parts by weight of water. When the boric acid concentration is set to 1 part by weight or more, the dissolution of the PVA-based resin layer can be effectively suppressed, and hence a polarizer having higher characteristics can be produced. An aqueous solution obtained by dissolving, for example, a boron compound such as borax, glyoxal, or glutaraldehyde in the solvent in addition to boric acid or the borate may also be used.

The stretching bath (aqueous solution of boric acid) is preferably blended with an iodide. The blending of the bath with the iodide can suppress the elution of iodine that the PVA-based resin layer has been caused to adsorb. Specific examples of the iodide are as described above. The concentration of the iodide is preferably from 0.05 part by weight to 15 parts by weight, more preferably from 0.5 part by weight to 8 parts by weight with respect to 100 parts by weight of water.

A stretching temperature (the liquid temperature of the stretching bath) is preferably from 40°C to 85°C, more preferably from 60°C to 75°C. With such temperature, the PVA-based resin layer can be stretched at a high ratio while its dissolution is suppressed. Specifically, as described above, the glass transition temperature (Tg) of the thermoplastic resin substrate is preferably 60°C or more in relation to the formation of the PVA-based resin layer. In this case, when the stretching temperature is less than 40°C, there is a risk in that the layer cannot be satisfactorily stretched even in consideration of the plasticization of the thermoplastic resin substrate by water. Meanwhile, as the temperature of the stretching bath increases, the solubility of the PVA-based resin layer may become higher to make it impossible to obtain excellent optical characteristics. The time period for which the laminate is immersed in the stretching bath is preferably from 15 seconds to 5 minutes.

A stretching ratio by the underwater stretching is preferably 1.5 times or more, more preferably 3.0 times or more.

The total stretching ratio of the laminate is preferably 5.0 times or more, more preferably 5.5 times or more with respect to the original length of the laminate. When such high stretching ratio is achieved, a polarizer extremely excellent in optical characteristics can be produced. Such high stretching ratio can be achieved by adopting an underwater stretching mode (in-boric-acid-solution stretching).

The drying shrinkage treatment may be performed by zone heating to be performed by heating the entirety of a zone, or may be performed by heating conveying rolls (using so-called heated rolls) (heated roll drying mode). Both of the zone heating and the heated roll drying mode are preferably used. When the laminate is dried with the heated rolls, the heating curl of the laminate is efficiently suppressed, and hence a polarizer excellent in external appearance can be produced. Specifically, when the laminate is dried in a state of being arranged along the heated rolls, the crystallization of the thermoplastic resin substrate is efficiently accelerated, and hence its crystallization degree can be increased. Accordingly, the crystallization degree of the thermoplastic resin substrate can be satisfactorily increased even at a relatively low drying temperature. As a result, the thermoplastic resin substrate is increased in rigidity to be in a state of being capable of resisting the shrinkage of the PVA-based resin layer by the drying, and hence the curl is suppressed. In addition, when the heated rolls are used, the laminate can be dried while being maintained in a flat state, and hence the occurrence of not only the curl but also a wrinkle can be suppressed. At this time, the optical characteristics can be improved by shrinking the laminate in its widthwise direction by the drying shrinkage treatment. This is because the orientation properties of the PVA and a PVA-iodine complex can be effectively improved. The shrinkage ratio of the laminate in the widthwise direction by the drying shrinkage treatment is preferably from 1% to 10%, more preferably from 2% to 8%, particularly preferably from 4% to 6%. When the heated rolls are used, the laminate can be continuously shrunk in the widthwise direction while being conveyed, and hence high productivity can be achieved.

FIG. **4** is a schematic view for illustrating an example of the drying shrinkage treatment. In the drying shrinkage treatment, a laminate **200** is dried while being conveyed with conveying rolls **R1** to **R6** each of which has been heated to a predetermined temperature and guide rolls **G1** to **G4.** In the illustrated example, the conveying rolls **R1** to **R6** are arranged so that the PVA-based resin layer surface and thermoplastic resin substrate surface of the laminate may be alternately heated in a continuous manner. However, for example, the conveying rolls **R1** to **R6** may be arranged so that only one surface of the laminate **200** (e.g., the thermoplastic resin substrate surface) may be continuously heated.

Drying conditions may be controlled by adjusting, for example, the heating temperature of each of the conveying rolls (temperature of each of the heated rolls), the number of the heated rolls, and the time period for which the laminate is brought into contact with the heated rolls. The temperature of each of the heated rolls is preferably from 60°C to 120°C, more preferably from 65°C to 100°C, particularly preferably from 70°C to 80°C. In this case, the crystallization degree of the thermoplastic resin substrate is satisfactorily increased, and hence the curl of the laminate can be satisfactorily suppressed. In addition, extremely excellent durability can be imparted to the laminate. The temperature of each of the heated rolls may be measured with a contact-type temperature gauge. Although the 6 conveying rolls are arranged in the illustrated example, the number of the conveying rolls is not particularly limited as long as the number is 2 or more. The number of the conveying rolls to be arranged is typically from 2 to 40, preferably from 4 to 30. The time period for which the laminate is brought into contact with the heated rolls (total contact time) is preferably from 1 second to 300 seconds, more preferably from 1 second to 20 seconds, still more preferably from 1 second to 10 seconds.

The heated rolls may be arranged in a heating furnace (e.g., an oven), or may be arranged in a typical production line (under a room temperature environment). The heated rolls are preferably arranged in a heating furnace including an air blower. When the drying with the heated rolls and drying with hot air are used in combination, a sharp temperature change between the heated rolls can be suppressed, and hence the shrinkage of the laminate in its widthwise direction can be easily controlled. The temperature of the hot-air drying is preferably from 30°C to 100°C. In addition, a hot-air drying time is preferably from 1 second to 300 seconds. The air speed of the hot air is preferably from about 10 m/s to about 30 m/s. The air speed is an air speed in the heating furnace, and may be measured with a mini-vane-type digital anemometer.

The laminate is preferably subjected to washing treatment after the underwater stretching treatment and before the drying shrinkage treatment. The washing treatment is typically performed by immersing the PVA-based resin layer in an aqueous solution of potassium iodide.

Examples

The present invention is specifically described below by way of Examples, but the present invention is not limited by these Examples. A thickness is a value measured by the following measurement method.

<Thickness>

A thickness of 10 um or less was measured with a scanning electron microscope (manufactured by JEOL Ltd., product name: "JSM-7100F"). A thickness of more than 10 um was measured with a digital micrometer (manufactured by Anritsu Corporation, product name: "KC-351C").

[Example 1]

An elongate amorphous isophthalic acid-copolymerized polyethylene terephthalate film (thickness: 100 um) having a water absorption ratio of 0.75% and a Tg of about 75°C was used as a thermoplastic resin substrate, and one surface of the resin substrate was subjected to corona treatment.

A PVA aqueous solution (application liquid) was prepared by: adding 13 parts by weight of potassium iodide to 100 parts by weight of a PVA-based resin obtained by mixing polyvinyl alcohol (polymerization degree: 4,200, saponification degree: 99.2 mol%) and acetoacetyl-modified PVA (manufactured by Mitsubishi Chemical Corporation, product name: "GOHSENX Z410") at a ratio of 9:1; and dissolving the mixture in water.

The PVA aqueous solution was applied to the corona-treated surface of the resin substrate, and was dried at 60°C to form a PVA-based resin layer having a thickness of 13 um. Thus, a laminate was produced.

The resultant laminate was subjected to uniaxial free-end stretching by 2.4 times in a longitudinal direction (lengthwise direction) between rolls having different peripheral speeds in an oven at 130°C (in-air auxiliary stretching treatment).

Next, the laminate was immersed in an insolubilizing bath having a liquid temperature of 40°C (an aqueous solution of boric acid obtained by blending 100 parts by weight of water with 4 parts by weight of boric acid) for 30 seconds (insolubilizing treatment).

Next, the laminate was immersed in a dyeing bath having a liquid temperature of 30°C (an aqueous solution of iodine obtained by blending 100 parts by weight of water with iodine and potassium iodide at a weight ratio of 1:7) for 60 seconds while the concentration was adjusted so that the single layer transmittance (Ts) of a polarizer to be finally obtained became 43.0% (dyeing treatment).

Next, the laminate was immersed in a cross-linking bath having a liquid temperature of 40°C (an aqueous solution of boric acid obtained by blending 100 parts by weight of water with 3 parts by weight of potassium iodide and 5 parts by weight of boric acid) for 30 seconds (cross-linking treatment).

After that, while the laminate was immersed in an aqueous solution of boric acid having a liquid temperature of 70°C (boric acid concentration: 4 wt%, potassium iodide concentration: 5 wt%), the laminate was uniaxially stretched between rolls having different peripheral speeds in the longitudinal direction (lengthwise direction) so that the total stretching ratio became 5.5 times (underwater stretching treatment).

After that, the laminate was immersed in a washing bath having a liquid temperature of 20°C (an aqueous solution obtained by blending 100 parts by weight of water with 4 parts by weight of potassium iodide) (washing treatment).

After that, the laminate was brought into contact with heated rolls made of SUS whose surface temperatures were kept at 75°C for about 2 seconds while being dried in an oven kept at 90°C (drying shrinkage treatment). The shrinkage ratio of the laminate in a widthwise direction by the drying shrinkage treatment was 5.2%.

Thus, a polarizer (absorption-type polarizer) having a thickness of 5 μm was formed on the resin substrate.

A cycloolefin-based resin film having a thickness of 25 um was bonded as a protective layer to the surface (surface on the polarizer side of the laminate) of the resultant polarizer via a UV-curable adhesive. Specifically, the adhesive was applied so that the thickness of the adhesive layer after its curing became about 1 μm, followed by the bonding with a roller machine. After that, a UV ray was applied from the cycloolefin-based resin film side to cure the adhesive. Next, the resin substrate was peeled. Thus, a polarizing film (absorption-type polarizing film) having the configuration "cycloolefin-based resin film/absorption-type polarizer" was obtained.

[Example 2]

A polarizing film including a polarizer having a thickness of 7 um was obtained in the same manner as in Example 1 except that a PVA-based resin layer having a thickness of 18 um was formed on the resin substrate.

[Comparative Example 1]

While an elongate roll of a polyvinyl alcohol (PVA)-based resin film having a thickness of 30 um (manufactured by Kuraray Co., Ltd., product name: "PE3000") was uniaxially stretched in its lengthwise direction with a roll stretching machine so that a stretching ratio in the lengthwise direction became 5.9 times, the film was simultaneously subjected to swelling treatment, dyeing treatment, cross-linking treatment, and washing treatment in the stated order. After that, the film was finally subjected to drying treatment to produce a polarizer (absorption-type polarizer) having a thickness of 12 um.

In the swelling treatment, the film was stretched at a ratio of 2.2 times while being treated with pure water at 20°C. Next, in the dyeing treatment, the film was stretched at a ratio of 1.4 times while being treated in an aqueous solution at 30°C having a weight ratio between iodine and potassium iodide of 1:7 in which an iodine concentration was adjusted so that the single layer transmittance of the polarizer to be obtained became 45.0%. Next, two-stage cross-linking treatment was adopted as the cross-linking treatment, and in the first-stage cross-linking treatment, the film was stretched at a ratio of 1.2 times while being treated in an aqueous solution at 40°C having dissolved therein boric acid and potassium iodide. The content of boric acid in the aqueous solution in the first-stage cross-linking treatment was set to 5.0 wt%, and the content of potassium iodide therein was set to 3.0 wt%. In the second-stage cross-linking treatment, the film was stretched at a ratio of 1.6 times while being treated in an aqueous solution at 65°C having dissolved therein boric acid and potassium iodide. The content of boric acid in the aqueous solution in the second-stage cross-linking treatment was set to 4.3 wt%, and the content of potassium iodide therein was set to 5.0 wt%. Next, in the washing treatment, the film was treated with an aqueous solution of potassium iodide at 20°C. The content of potassium iodide in the aqueous solution in the washing treatment was set to 2.6 wt%. Finally, the film was subjected to the drying treatment at 70°C for 5 minutes to provide the polarizer.

A cycloolefin-based resin film having a thickness of 25 um was bonded as a protective layer to the resultant polarizer with a 3% aqueous solution of a PVA-based adhesive (manufactured by Mitsubishi Chemical Corporation, product name: "GOHSENOL Z200"). Thus, a polarizing film was obtained.

[Comparative Example 2]

A polarizing film including a polarizer having a thickness of 17 um was obtained in the same manner as in Comparative Example 1 except that a PVA-based resin film having a thickness of 45 um was used.

[Comparative Example 3]

A polarizing film including a polarizer having a thickness of 23 um was obtained in the same manner as in Comparative Example 1 except that a PVA-based resin film having a thickness of 60 um was used.

[Comparative Example 4]

A polarizing film including a polarizer having a thickness of 30 um was obtained in the same manner as in Comparative Example 1 except that a PVA-based resin film having a thickness of 75 um was used.

Examples and Comparative Examples were subjected to the following evaluations. The results of the evaluations are summarized in Table 1.

<Evaluation>

1. Dimensional Change Ratio (%)

A test piece having a size measuring 100 mm by 100 mm was cut out of each of the resultant polarizing films along the stretching direction of the film and a direction perpendicular thereto, and was bonded to a glass plate via an acrylic pressure-sensitive adhesive layer having a thickness of 20 um. The resultant was placed in an oven at 80°C and heated for 500 hours. The sizes of the test piece before and after the heating were measured, and a dimensional change ratio before and after the heating was calculated.

2. Shrinkage Stress (N/4 mm)

A test piece having a size measuring 20 mm by 4 mm was cut out of each of the resultant polarizers (before the bonding of a protective film) along the stretching direction of the polarizer and a direction perpendicular thereto, and was set in a TMA analyzer (manufactured by Hitachi High-Tech Science Corporation, "TMA7100E"). While the state was held, the test piece was heated at 50°C for 30 minutes, and a shrinkage stress produced from the test piece was measured.

3. Optical Unevenness

Each of the resultant polarizing films was cut into a size measuring 200 mm by 150 mm, and the test piece was bonded to a glass plate via a 20-micrometer acrylic pressure-sensitive adhesive layer. The resultant sample was loaded into a heating tester at 80°C for 120 hours. After that, the sample was removed, and another standard polarizing plate (manufactured by Nitto Denko Corporation, "CRT1794") was superimposed thereon so that their absorption axes were perpendicular to each other. The resultant was mounted on a backlight, and unevenness in its surface was observed under the state.

Table 1

| | Thickness (um) | Dimensional change ratio (%) | Shrinkage stress (N/4 mm) | Optical unevenness |
|---|---|---|---|---|
| Example 1 | 5 | 0.18 | 0.35 | Satisfactory |
| Example 2 | 7 | 0.20 | 0.40 | Satisfactory |
| Comparative Example 1 | 12 | 0.27 | 0.5 | Unsatisfactory |
| Comparative Example 2 | 17 | 0.32 | >1.4 | Unsatisfactory |
| Comparative Example 3 | 23 | 0.41 | >1.4 | Unsatisfactory |
| Comparative Example 4 | 30 | 0.45 | >1.4 | Unsatisfactory |

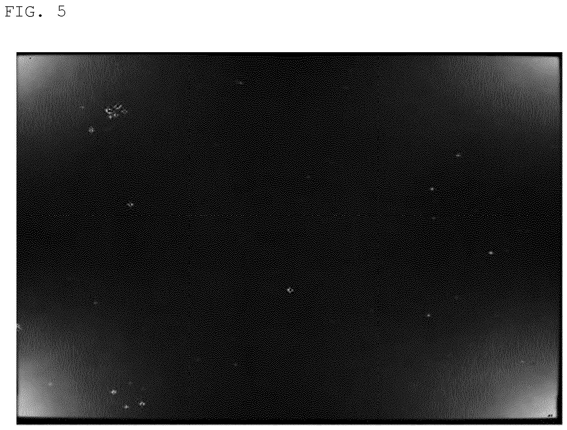

In each of Comparative Examples, as shown in FIG. 5, optical unevenness was observed (particularly in a corner portion).

The present invention is not limited to the above-mentioned embodiments, and various modifications may be made thereto. For example, the configurations described in the above-mentioned embodiments may each be replaced by substantially the same configuration, a configuration having the same action and effect, and a configuration that can achieve the same object.

Industrial Applicability

The lens unit according to the embodiment of the present invention may be used in, for example, a display body such as a pair of VR goggles.

Reference Signs List

**2** display system
**4** lens unit
**12** display element
**14** reflecting portion
**16** first lens portion
**18** half mirror
**20** first retardation member
**22** second retardation member
**24** second lens portion
**30** laminate
**32** reflection-type polarizing member
**34** absorption-type polarizing member
**36** adhesion layer

**Claims**

1. A lens unit to be used in a display system configured to display an image to a user, the lens unit comprising:

a reflecting portion including a reflection-type polarizing member and an absorption-type polarizing member arranged on a front side of the reflection-type polarizing member, the reflecting portion being configured to reflect light, which has been emitted to the front side from a display surface of a display element configured to display the image, and has passed through a polarizing member and a first $\lambda/4$ member;
a first lens portion arranged on an optical path between the display element and the reflecting portion;
a half mirror arranged between the display element and the first lens portion, the half mirror being configured to transmit the light emitted from the display element and to reflect the light reflected by the reflecting portion toward the reflecting portion; and
a second $\lambda/4$ member arranged on an optical path between the half mirror and the reflecting portion,
wherein an absorption-type polarizer for forming the absorption-type polarizing member has a thickness of 8 um or less.

2. The lens unit according to claim 1, wherein a reflection axis of the reflection-type polarizing member and an absorption axis of the absorption-type polarizing member are arranged parallel to each other.

3. The lens unit according to claim 1, wherein the first lens portion and the half mirror are integrated.

4. The lens unit according to claim 1, further comprising a second lens portion arranged on the front side of the reflecting portion.

5. The lens unit according to claim 1,

wherein an angle formed by an absorption axis of the polarizing member in the display element and a slow axis of the first $\lambda/4$ member is from 40° to 50°, and
wherein an angle formed by the absorption axis of the polarizing member in the display element and a slow axis of the second $\lambda/4$ member is from 40° to 50°.

6. The lens unit according to claim 1, wherein a ratio of the thickness of the absorption-type polarizer to a thickness of the reflection-type polarizing member is 15% or less.

7. A laminate to be used in the reflecting portion of the lens unit of any one of claims 1 to 6, the laminate comprising:

the reflection-type polarizing member; and
the absorption-type polarizing member.

8. The laminate according to claim 7, wherein the reflection-type polarizing member and the absorption-type polarizing member are laminated via an adhesion layer.

9. A display body, comprising the lens unit of any one of claims 1 to 6.

10. A method of producing a display body including the lens unit of any one of claims 1 to 6.

11. A display method, comprising:

a step of passing light representing an image, which has been emitted through a polarizing member and a first $\lambda/4$ member, through a half mirror and a first lens portion;
a step of passing the light, which has passed through the half mirror and the first lens portion, through a second $\lambda/4$ member;
a step of reflecting the light, which has passed through the second $\lambda/4$ member, toward the half mirror with a reflecting portion including a reflection-type polarizing member;
a step of enabling the light, which has been reflected by the reflecting portion and the half mirror, to penetrate through the reflection-type polarizing member of the reflecting portion with the second $\lambda/4$ member; and
a step of causing the light, which has penetrated through the reflection-type polarizing member, to penetrate through an absorption-type polarizing member,
wherein an absorption-type polarizer for forming the absorption-type polarizing member has a thickness of 8 um or less.

12. A method of producing the absorption-type polarizer of the lens unit of any one of claims 1 to 6, comprising:

forming a polyvinyl alcohol-based resin layer containing a halide and a polyvinyl alcohol-based resin on one side of an elongate thermoplastic resin substrate to provide a laminate; and
subjecting the laminate to in-air auxiliary stretching treatment, dyeing treatment, underwater stretching treatment, and drying shrinkage treatment, which includes heating the laminate, while conveying the laminate in a lengthwise direction thereof, to shrink the laminate by 2% or more in a widthwise direction thereof, in the stated order.

13. The production method according to claim 12, wherein a content of the halide in the polyvinyl alcohol-based resin layer is from 5 parts by weight to 20 parts by weight with respect to 100 parts by weight of the polyvinyl alcohol-based resin.

14. The production method according to claim 12, wherein a stretching ratio in the in-air auxiliary stretching treatment is 2.0 times or more.

15. The production method according to claim 12, wherein the drying shrinkage treatment step is a step of heating the laminate with heated rolls.

16. The production method according to claim 15, wherein the heated rolls each have a temperature of from 60°C to 120°C, and a shrinkage ratio of the laminate in the widthwise direction by the drying shrinkage treatment is 2% or more.

FIG. 1

FIG. 2

FIG. 3

FIG. 4

FIG. 5

<table>
<tr><td colspan="2">**INTERNATIONAL SEARCH REPORT**</td><td>International application No.<br><br>**PCT/JP2023/006727**</td></tr>
</table>

**A. CLASSIFICATION OF SUBJECT MATTER**

***G02B 27/02***(2006.01)i; ***G02B 5/30***(2006.01)i
FI: G02B27/02 Z; G02B5/30

According to International Patent Classification (IPC) or to both national classification and IPC

**B. FIELDS SEARCHED**

Minimum documentation searched (classification system followed by classification symbols)

G02B27/00-30/60,5/30,G09G3/00-3/08,3/12,3/16,3/19-3/26,3/34,3/38,H04N5/64-5/655

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-505854 A (SHENZHEN DLODLO NEW TECHNOLOGY CO., LTD.) 28 February 2019 (2019-02-28)<br>  paragraphs [0025]-[0051], [0071]-[0074], fig. 4, 8, 9 | 1-16 |
| Y | WO 2019/235107 A1 (NITTO DENKO CORP.) 12 December 2019 (2019-12-12)<br>  paragraphs [0005], [0006], [0011], [0029] | 1-16 |
| Y | CN 113448101 A (GOERTEK INC.) 28 September 2021 (2021-09-28)<br>  paragraphs [0006], [0016], [0021]-[0050], fig. 2 | 4, 5, 7-10, 12-16 |
| Y | WO 2021/106742 A1 (NITTO DENKO CORP.) 03 June 2021 (2021-06-03)<br>  paragraphs [0005]-[0007], [0063] | 12-16 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>**28 March 2023** | Date of mailing of the international search report<br><br>**11 April 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

| | INTERNATIONAL SEARCH REPORT | International application No. |
| | Information on patent family members | PCT/JP2023/006727 |

| Patent document cited in search report | | | Publication date (day/month/year) | Patent family member(s) | | | Publication date (day/month/year) |
|---|---|---|---|---|---|---|---|
| JP | 2019-505854 | A | 28 February 2019 | US | 2019/0033599 | A1 | |
| | | | | paragraphs [0062]-[0088], [0112]-[0115], fig. 4, 8, 9 | | | |
| | | | | WO | 2017/128183 | A1 | |
| | | | | EP | 3410173 | A1 | |
| | | | | KR | 10-2018-0105698 | A | |
| WO | 2019/235107 | A1 | 12 December 2019 | CN | 112262329 | A | |
| | | | | KR | 10-2021-0015841 | A | |
| | | | | TW | 202001306 | A | |
| CN | 113448101 | A | 28 September 2021 | WO | 2023/273175 | A1 | |
| WO | 2021/106742 | A1 | 03 June 2021 | CN | 114761840 | A | |
| | | | | KR | 10-2022-0105633 | A | |

Form PCT/ISA/210 (patent family annex) (January 2015)

**REFERENCES CITED IN THE DESCRIPTION**

**Patent documents cited in the description**

- JP 2021103286 A
- JP 2014010291 A
- JP 2014026266 A

- JP 2015212816 A
- JP 2015212817 A
- JP 2015212818 A